# EUROPÄISCHE PATENTSCHRIFT

(11) **EP 3 593 623 B1**
(45) Veröffentlichungstag und Bekanntmachung des Hinweises auf die Patenterteilung: **07.07.2021**
(21) Anmeldenummer: 19172924.3
(22) Anmeldetag: 07.05.2019
(51) Int. Cl.: A01D 89/00

(54) **ERNTEMASCHINE MIT EINER ERNTEGUTAUFNAHMEVORRICHTUNG**
HARVESTING MACHINE WITH A PICK UP DEVICE
MACHINE DE RÉCOLTE DOTÉ D'UN DISPOSITIF DE RAMASSAGE DE RÉCOLTE

(30) Priorität: 10.07.2018 DE 102018116603
(43) Veröffentlichungstag der Anmeldung: 15.01.2020
(73) Patentinhaber: Usines CLAAS France S.A.S, 57140 St. Rémy / Woippy (FR)
(72) Erfinder: Batancourt, Grégory, 57130 Vionville (FR); Anstotz, Arnaud, 67000 Strasbourg (FR)
(74) Vertreter: CLAAS Gruppe

(56) Entgegenhaltungen:
- EP-A1- 1 252 814
- EP-A1- 1 417 879
- EP-A1- 2 674 023
- WO-A1-2014/180848
- US-A1- 2007 119 140

## Beschreibung

Die Erfindung betrifft eine Erntemaschine, insbesondere eine Ballenpresse oder einen Ladewagen, für landwirtschaftliches Erntegut gemäß dem Oberbegriff des Anspruchs 1.

Erntemaschinen wie landwirtschaftliche Ballenpressen oder Ladewagen dienen der Aufnahme und Weiterverarbeitung oder dem Transport von Erntegut, beispielsweise Halm- und/oder Blattgut in Form von Stroh, Heu oder Silage, welches auf einem Feld in Form eines Schwads abgelegt wurde. Zur Aufnahme des Erntegutes weist eine derartige Erntemaschine üblicherweise eine Aufnahmevorrichtung, eine sogenannte Pickup, auf, welche beispielsweise eine mit Zinken versehene rotierende Aufsammeltrommel umfasst. Bei einer Rotation der Aufsammeltrommel kann das auf dem Boden liegende, üblicherweise in einem Schwad abgelegte, Erntegut durch die Zinken vom Boden aufgenommen und beispielsweise zu einem nachgeordneten Förderrotor und/oder Erntegutkanal transportiert werden. Da die Aufnahmevorrichtung und die Aufsammeltrommel üblicherweise eine deutlich größere Breite als der ein daran anschließender Erntegutkanal und/oder darin angeordneter Förderrotor aufweisen, sind an den Aufnahmevorrichtungen oftmals parallel zu der Aufsammeltrommel angeordnete, drehbare Förderschnecken vorgesehen, welche ein Zusammenführen des aufgenommenen Erntegutes zur Mitte der Aufnahmevorrichtung hin bewirken. Besonders bei Erntemaschinen in Form von Ballenpressen ist eine möglichst gleichmäßige Verteilung des zusammengeführten Erntegutes von Interesse, da dies auch die Ballenbildung beeinflusst. Durch die Förderschnecken kann daher auch, insbesondere in einer Richtung quer zur Förderrichtung, eine gleichmäßigere Verteilung des Erntegutes vor einer Zuführung zu dem Förderrotor und/oder Erntegutkanal erreicht werden.

Aus der DE 198 06 630 C2 ist eine Aufnahmevorrichtung für eine Ballenpresse mit in Gutförderrichtung vor dem Pressraum angeordneter Pickup-Trommel und anschließender Zerkleinerungseinrichtung bekannt. Hierbei wird das über die Pickup-Trommel aufgenommene Erntegut von einer zwischen der Pickup-Trommel und einem Schneidrotor angeordnete Querförderschnecke an den Schneidrotor gefördert und dabei zumindest teilweise in Querrichtung zusammengeführt. Mit zunehmender Breite der Aufnahmevorrichtung steigt jedoch auch die Menge des aufgenommenen Erntegutes an und es muss eine größere Menge an Erntegut mittig im Wesentlichen auf die Breite des Erntegutkanals zusammengeführt werden. Aufgrund der Menge des zusammenzuführenden Erntegutes kann es jedoch zu einer ungleichmäßigen Verteilung des Erntegutes kommen, wodurch die Qualität der Ballen einer Ballenpresse beeinträchtigt würde. Nachteilig ist zudem, dass durch das reine Zusammenführen des Erntegutes ungleichmäßig ausgebildete Schwade nur schwer kompensiert werden können, was die Qualität von daraus gepressten Ballen ebenfalls beeinträchtigt.

Eine landwirtschaftliche Erntemaschine gemäß dem Oberbegriff des Anspruches 1 ist aus der EP 1 417 879 A1 bekannt.

Es ist daher eine Aufgabe der Erfindung, eine landwirtschaftliche Erntemaschine mit einer Aufnahmevorrichtung anzugeben, welche eine verbesserte Verteilung des Erntegutes vor einer Zuführung in den Erntegutkanal ermöglicht.

Die Aufgabe wird erfindungsgemäß durch die kennzeichnenden Merkmale des unabhängigen Patentanspruches 1 gelöst. Vorteilhafte Ausgestaltungen und Weiterbildungen der Erfindung sind in den Unteransprüchen und der Beschreibung angegeben.

Eine Landwirtschaftliche Erntemaschine umfasst eine Aufnahmevorrichtung für landwirtschaftliches Erntegut, wobei die Aufnahmevorrichtung neben einer frontseitig angeordneten, antreibbaren Aufsammeltrommel zum Aufnehmen von Erntegut mindestens ein antreibbares Förderorgan zum Fördern von Erntegut zu einem Erntegutkanal, insbesondere einem Förderrotor in dem Erntegutkanal, und mindestens einen, in Förderrichtung vor dem Förderorgan angeordneten, Rollenniederhalter aufweist. Gemäß der Erfindung weist der Rollenniederhalter mindestens zwei Förderabschnitte auf, durch welche zumindest ein Teil des Erntegutes im Wesentlichen quer zu der Längsachse und/oder in Richtung der Längsachse der Erntemaschine ablenkbar ist.

Der Rollenniederhalter mit mindestens zwei Förderabschnitten gemäß der Erfindung ermöglicht eine unterschiedliche Ausgestaltung der jeweiligen Förderabschnitte zur getrennten und unterschiedlichen Beeinflussung der Förderung des Erntegutes durch den Rollenniederhalter, schon bevor das Erntegut an das Förderorgan weitergeleitet wird. Der erste Rollenniederhalter kann dabei im Wesentlichen Oberhalb des Förderorgans angeordnet sein, um mit diesem zusammenzuwirken. So kann ein Förderabschnitt eine Förderung des Erntegutes quer zur Längsrichtung der Erntemaschine bewirken und ein anderer Förderabschnitt eine Förderung in Längsrichtung oder ein reines Niederhalten des Erntegutes. Dies hat den Vorteil, dass die gleichmäßige Verteilung des Erntegutes bereits vor einer Zuführung zum Förderorgan und/oder Förderrotor verbessert werden kann.

Vorteilhafterweise weist der Rollenniederhalter drei Förderabschnitte auf, wobei ein erster Förderabschnitt im Wesentlichen mittig des Rollenniederhalters und/oder der Aufnahmevorrichtung angeordnet ist, und ein zweiter und dritter Förderabschnitt jeweils außenseitig des ersten Förderabschnittes angeordnet sind. Der zweite und dritte Förderabschnitt können das Erntegut dabei im Wesentlichen quer zur Längsrichtung zum ersten Förderabschnitt hin fördern. Der große Vorteil ist hierbei, dass bereits eine Förderung des Erntegutes durch den Rollenniederhalter in Querrichtung erfolgt, bevor dieses an das Förderorgan gelangt, wodurch dessen Förderwirkung, insbesondere Querförderwirkung, verbessert werden kann. Dies ermöglicht eine gleichmäßigere Verteilung des Erntegutes, insbesondere bei einem unregelmäßig ausgebildeten Schwad, vor der Zuführung zum Schneidrotor oder Erntegutkanal.

In einer besonders vorteilhaften Weiterbildung sind die Förderabschnitte koaxial oder in axialer Richtung versetzt zueinander angeordnet. Eine koaxiale Anordnung der Förderabschnitte entlang der Rotationsachse ermöglicht eine bauraumsparende Anordnung der Förderabschnitte, beispielsweise nebeneinander, wodurch unterschiedliche Fördereigenschaften der jeweiligen Förderabschnitte, wie eine Förderung quer zur Längsrichtung oder in Längsrichtung, kombinierbar sind. Durch eine zur Rotationsachse versetzte Anordnung der Förderabschnitte, beispielsweise mit den äußeren, zweiten und dritten, Förderabschnitten in Förderrichtung vor dem mittigen, beispielsweise ersten, Förderabschnitt, kann eine zumindest teilweise Vorförderung des Erntegutes in Querrichtung durch den Rollenniederhalter verbessert werden.

Vorteilhafterweise weisen die außenseitigen Förderabschnitte, insbesondere ein zweiter und dritter Förderabschnitt, eine spiralförmig ausgestaltete Oberflächenprofilierung auf, welche eine Querförderung des Erntegutes ermöglicht. Ein Außendurchmesser der äußeren, insbesondere zweiten und dritten, Förderabschnitte kann größer oder gleich einem Außendurchmesser des mittlere, insbesondere ersten, Förderabschnittes sein. Durch einen beispielsweise größeren Außendurchmesser der äußeren Förderabschnitte kann eine Förderwirkung in Querrichtung des Rollenniederhalters verbessert werden, da so auch Erntegut der üblicherweise abflachenden Außenkante des Schwades erfasst werden kann.

In einer vorteilhaften Ausgestaltung der Erfindung weist der erste Förderabschnitt eine jeweils endseitig, insbesondere in der Aufnahmevorrichtung, drehbar gelagerte Welle auf, wobei die äußeren, insbesondere zweiten und dritten, Förderabschnitte auf der Welle drehbar angeordnet sind. Dabei können mehrere Förderabschnitte an einer oder beiden Seiten des ersten Förderabschnittes drehbar angeordnet sein. Die drehbar angeordneten, insbesondere zweiten und dritten, Förderabschnitte können dabei gemeinsam mit der Welle drehbar oder relativ zu der Welle drehbar sein. Dies hat den Vorteil, dass durch die insbesondere koaxiale Anordnung auf der Welle des ersten Förderabschnittes eine zuverlässige Lagerung der Förderabschnitte ermöglicht wird.

In einer besonders vorteilhaften Ausgestaltung der Erfindung sind die äußeren Förderabschnitte, insbesondere der zweite und dritte Förderabschnitt, antreibbar, wobei der mittige, insbesondere der erste, Förderabschnitt in einem Freilauf durch den Kontakt mit dem Erntegut drehbar ausgebildet ist. Dies hat den Vorteil, dass eine Querförderung des Erntegute durch die äußeren Förderabschnitte ermöglicht werden kann, ohne die Niederhaltefunktion des Rollenniederhalters, insbesondere dessen ersten Förderabschnittes, zu beeinträchtigen.

Weiterhin sind die Förderabschnitte mit unterschiedlichen Drehzahlen antreibbar. Weiterhin sind in einer weiteren Ausgestaltung der Erfindung die Förderabschnitte in unterschiedlichen Drehrichtungen antreibbar. Die äußeren Förderabschnitte können dabei schneller rotieren, als der mittige Förderabschnitt. Hierdurch können unterschiedliche Fördereigenschaften der einzelnen Förderabschnitte besser genutzt und aufeinander abgestimmt werden. Dies hat den Vorteil, dass auch bei einem unregelmäßig ausgebildeten Schwad und/oder einer außermittigen Aufnahme des Erntegutes eine gleichmäßige Verteilung des Erntegutes vor der Zuführung zu dem Förderorgan und/oder dem Förderrotor ermöglicht werden kann.

Dabei ist die Drehzahl jedes Förderabschnittes in Abhängigkeit mindestens eines Betriebsparameters regelbar. Gemäß einer weiteren vorteilhaften Ausgestaltung ist eine Drehrichtung eines Förderabschnittes in Abhängigkeit mindestens eines Betriebsparameters regelbar. Durch die Berücksichtigung von Betriebsparametern, insbesondere der Form und/oder des Querschnittes des Schwads, kann die Förderung und/oder Verteilung des Erntegutes durch die einzelnen Förderabschnitte weiter verbessert werden. Vorteilhaft ist dabei, dass Veränderungen, beispielsweise an der Erntemaschine oder bei dem Erntegut, besser berücksichtigt werden können und so eine bessere, gleichmäßigere Verteilung des Erntegutes vor der weiteren Förderung ermöglicht werden kann.

In einer weiteren, vorteilhaften Ausgestaltung ist ein zweiter Rollenniederhalter vorgesehen, welcher in Förderrichtung vor dem ersten Rollenniederhalter und insbesondere vor der Aufsammeltrommel angeordnet ist. Hierdurch kann vor der Aufsammeltrommel das Erntegut gegen den Boden vorverdichtet werden und die Aufnahme des Erntegutes durch die Aufsammeltrommel verbessert werden.

Die Erfindung wird im Folgenden unter Hinweis auf die beigefügten Figuren anhand eines bevorzugten Ausführungsbeispiels näher erläutert. Daraus ergeben sich auch weitere Einzelheiten und Vorteile der Erfindung.

Es zeigen:
- Fig. 1: eine Ballenpresse in schematischer Seitenansicht mit einer Aufnahmevorrichtung gemäß der Erfindung; und
- Fig. 2: eine detaillierte Darstellung der Aufnahmevorrichtung in einer Draufsicht mit einem ersten Rollenniederhalter und einem zweiten Rollenniederhalter.

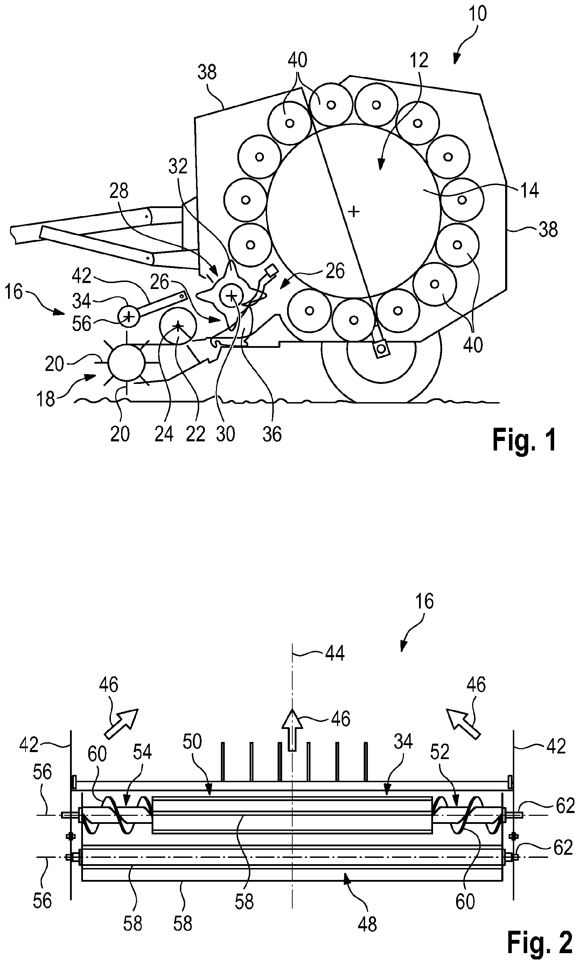

In Fig. 1 ist eine landwirtschaftliche Erntemaschine 10 in Form einer Ballenpresse in einer schematischen Seitenansicht dargestellt. Eine Erntemaschine 10 gemäß der Erfindung kann dabei in Form einer Ballenpresse für Rund- oder Quaderballen, eines Ladewagens oder einer selbstfahrenden Erntemaschine wie einem Feldhäcksler oder einem Mähdrescher ausgebildet sein. Erntemaschinen 10 in Form von Ballenpressen oder Ladewagen werden dabei üblicherweise durch ein Zugfahrzeug wie einen Traktor (nicht dargestellt) gezogen und über eine mit diesem koppelbare Antriebswelle zum Antrieb von Förder- und Verarbeitungseinrichtungen mit Energie versorgt. Die dargestellte Ballenpresse 10 nimmt im Erntebetrieb auf dem Feldboden liegendes Erntegut auf, beispielsweise in einem Schwad abgelegtes Stroh oder Gras, und verarbeitet dieses zu einem in einer Presskammer 12 gepressten Ballen 14, welcher nach seiner Fertigstellung heckseitig aus der Ballenpresse 10 ausgeworfen wird.

Das Erntegut wird hierbei von der Ballenpresse 10 mittels einer Aufnahmevorrichtung 16, einer sogenannten Pickup, welche frontseitig eine antreibbare Aufsammeltrommel 18 mit daran angeordneten Zinken 20 aufweist, vom Boden aufgenommen, um es den weiteren Förder- und Verarbeitungseinrichtungen der Ballenpresse 10 zuzuführen. Die Förderrichtung des Erntegutes von der Aufsammeltrommel 18 beispielsweise zu der Presskammer 12 entspricht dabei im Wesentlichen einer Längsrichtung der Erntemaschine 10. Nach der Aufnahme durch die Aufsammeltrommel 18 wird das Erntegut zunächst einem der Aufsammeltrommel 18 nachgeordneten Förderorgan 22 zugeführt. Das Förderorgan 22 erstreckt sich dabei, ebenso wie die Aufsammeltrommel 18, im Wesentlichen über eine gesamte Breite der Aufnahmevorrichtung 16.

Das teilweise spiralförmig ausgebildete Förderorgan 22 ist antreibbar um eine Drehachse 24 drehbar gelagert und kann das Erntegut von einer ursprünglichen Aufnahmebreite der Aufsammeltrommel 18 auf eine geringere Breite eines in Förderrichtung nachgelagerten Erntegutkanals 26 zusammenführen. Zudem kann das Förderorgan das Erntegut einem in Förderrichtung nachgelagerten Förderrotor 28 zuführen. Der Förderrotor 28 ist um eine Rotorachse 30 drehbar gelagert und weist eine Vielzahl von zueinander beabstandet angeordneten, sternförmigen Rotorelementen 32 auf, welche in den Erntegutkanal 26 hineinwirken, um das Erntegut beispielsweise zur Verdichtung in Richtung der Presskammer 12 zu fördern. In Förderrichtung vor dem Förderorgan 22 ist ein erster Rollenniederhalter 34 angeordnet, welcher an Auslegern in vertikaler Richtung schwenkbar befestigt. Der erste Rollenniederhalter 34 ist oberhalb des Förderorgans 22 angeordnet und wirkt mit diesem zusammen, um ein Abheben des Erntegutes von der Aufsammeltrommel 18 zu vermeiden und eine Vorverdichtung des Erntegutes zu bewirken.

Unterhalb des Förderrotors 28 ist eine Schneidvorrichtung 36 angeordnet, welche eine Vielzahl von Schneidelementen aufweist, die zum Zerkleinern des Erntegutes zumindest teilweise in den Erntegutkanal 26 hineinschwenkbar ausgebildet sind. Die Schneidvorrichtung 36 ist dabei im Wesentlichen presskammerseitig des Förderrotors 28 angeordnet. Das zerkleinerte Erntegut wird anschließend der Presskammer 12 zugeführt, welche innerhalb eines Gehäuses 38 der Ballenpresse 10 durch kreisförmig angeordnete und antreibbare Presswalzen 40 ausgebildet ist.

In Figur 2 ist die Aufnahmevorrichtung 16 gemäß der Erfindung in einer Draufsicht dargestellt. Ein erster Rollenniederhalter 34 ist jeweils endseitig drehbar an Auslegern 42 gelagert, welche insbesondere in vertikaler Richtung schwenkbar an dem Gehäuse 38 gelagert sein kann. Entlang einer Längsachse 44 und in Förderrichtung 46 vor dem ersten Rollenniederhalter 34 ist ein zweiter Rollenniederhalter 48 vorgesehenen. Der zweite Rollenniederhalter 48 ist dabei gemeinsam mit dem ersten Rollenniederhalter 34 an den Auslegern 42 drehbar angeordnet. Der zweite Rollenniederhalter 48 kann ebenso wie der erste Rollenniederhalter 34 ausgebildet sein.

Der erste Rollenniederhalter 34 weist einen ersten Förderabschnitt 50 auf, welcher im Wesentlichen mittig der Aufnahmevorrichtung 16 angeordneten ist. Der erste Förderabschnitt 50 kann dabei im Wesentlichen eine Breite entsprechend des Erntegutkanals 26 und/oder Förderorgans 22 aufweisen. An den ersten Förderabschnitt 50 schließen sich jeweils endseitig ein zweiter Förderabschnitt 52 und ein dritter Förderabschnitt 54 an. Der zweite Förderabschnitt 52 und der dritte Förderabschnitt 54 sind koaxial zu dem ersten Förderabschnitt 50 entlang einer Rotationsachse 56 angeordnet und um diese drehbar gelagert. Denkbar ist auch eine Anordnung von weiteren Förderabschnitten entlang der Rotationsachse 56, welche drehbar oder drehfest zur Rotationsachse 56, beispielsweise als Leitelemente, ausgebildet sein können. Die Förderabschnitte 50, 52, 54 können unterschiedliche Fördereigenschaften aufweisen und/oder austauschbar ausgebildet sein. So kann der erste Förderabschnitt 50 für ein Niederhalten und/oder Förderung des Erntegutes entlang der Längsachse 44 der Erntemaschine 10, insbesondere zu dem Förderorgan 22 hin, ausgebildet sein. Der zweite Förderabschnitt 52 und der dritte Förderabschnitt 54 hingegen können für eine Förderung des Erntegutes im Wesentlichen quer zu der Längsrichtung 44 der Erntemaschine 10 ausgebildet sein, um das Erntegut von der Aufnahmebreite zusammenzuführen und vor dem Zuführen zum Förderorgan 22 bereits eine Querförderung des Ernteguts zu bewirken, um die Wirkung des Förderorgans 22 zu verbessern.

Zur Förderung des Erntegutes weist ein Förderabschnitt 50, 52, 54 jeweils eine außenseitige Profilierung auf. Der erste Förderabschnitt 50 weist dabei eine in axiale Profilierung 58 auf, welche sich entlang der Rotationsachse 56 erstreckt und in Umfangsrichtung wellenförmig ausgebildet ist. Diese axiale Profilierung 58 erstreckt sich auch über die gesamte Breite des zweiten Rollenniederhalters 48. Der zweite und dritte Förderabschnitt 52, 54, welche im Wesentlichen ein Förderung des Erntegutes quer zur Längsrichtung der Erntemaschine 10 bewirken sollen, weisen umfangsseitig jeweils eine spiralförmige Profilierung 60 auf. Die spiralförmige Profilierung 60 weist dabei eine Fläche zum Fördern des Erntegutes auf, die im Wesentlichen unter einem Winkel zur Rotationsachse 56 ausgebildet ist, insbesondere um bei einer Rotation des Förderabschnittes 52, 54 eine Förderung des Erntegute im Wesentlichen quer zur Längsrichtung 44 der Erntemaschine 10 zu bewirken. Die sspiralförmigen Profilierungen 60 des zweiten und dritten Förderabschnittes 52, 54 können dabei gegeneinander fördernd bzw. gegenläufig ausgebildet sein.

Die Förderabschnitte 50, 53, 54 können dabei gemeinsam oder unabhängig voneinander drehbar und/oder antreibbar ausgebildet sein. Der erste Förderabschnitt 50 kann über eine Welle 62 drehbar mit den Auslegern 42 verbunden sein. Der zweite und dritte Förderabschnitt 52, 54 können relativ und/oder unabhängig zu der Welle 62 drehbar auf dieser angeordnet sein. Eine Drehzahl und/oder Drehrichtung der jeweiligen Förderabschnitte 50, 52, 54 kann dabei einzeln oder gruppiert Steuer- und regelbar, beispielsweise durch eine Steuereinheit (nicht dargestellt) einstellbar sein. Eine Drehzahl und/oder eine Drehrichtung des ersten Förderabschnittes 50 kann dabei unabhängig von einer Drehzahl und/oder Drehrichtung des zweiten und/oder dritten Förderabschnittes 52, 54 einstellbar sein. Hierbei kann der erste Förderabschnitt 50 unabhängig von dem zweiten und dritten Förderabschnitt 52, 54 in einem Freilauf drehen und so eine Niederhaltefunktion des Erntegutes ausüben. Ein von dem ersten Förderabschnitt 50 unabhängiger Antrieb des zweiten und dritten Förderabschnittes 52, 54 ermöglicht beispielsweise bei einem Schwad mit ungleichmäßigem Querschnitt, oder stark unterschiedlichen Querschnitten, eine unterschiedliche Drehzahl und damit Förderwirkung der beiden äußeren Förderabschnitte 52, 54 so einzustellen, dass eine möglichst gleichmäßige Verteilung des Erntegutes innerhalb der Aufnahmevorrichtung 16 erfolgen kann. Dies hat den Vorteil, dass bereits durch den ersten Rollenniederhalter 34 eine Vorförderung des Erntegutes in Querrichtung ermöglicht wird und das Förderorgan 22 so unterstützt werden kann. Eine Drehzahl und/oder eine Drehrichtung eines oder mehrerer Förderabschnitte 50, 52, 54 ist dabei in Abhängigkeit mindestens eines Betriebsparameters einstellbar, um eine optimale Verteilung und Förderung des Erntegutes zu erreichen. Ein Betriebsparameter ist dabei beispielsweise die Art und/oder eine spezifische Eigenschaft des zu verarbeitenden Erntegutes, eine Fördergeschwindigkeit des Erntegutes in dem Erntegutkanal, eine Schwadgeometrie, und/oder eine Fahrgeschwindigkeit der Erntemaschine, welche die Menge des aufgenommen Erntegutes beeinflusst.

### Bezugszeichenliste

- 10: Erntemaschine
- 12: Presskammer
- 14: Ballen
- 16: Aufnahmevorrichtung
- 18: Aufsammeltrommel
- 20: Zinken
- 22: Förderorgan
- 24: Drehachse
- 26: Erntegutkanal
- 28: Förderrotor
- 30: Rotorachse
- 32: Rotorelement
- 34: erster Rollenniederhalter
- 36: Schneidvorrichtung
- 38: Gehäuse
- 40: Presswalzen
- 42: Ausleger
- 44: Längsachse
- 46: Förderrichtung
- 48: zweiter Rollenniederhalter
- 50: erster Förderabschnitt
- 52: zweiter Förderabschnitt
- 54: dritter Förderabschnitt
- 56: Rotationsachse
- 58: axiale Profilierung
- 60: spiralförmige Profilierung
- 62: Welle

## Patentansprüche

1. Landwirtschaftliche Erntemaschine mit einer Aufnahmevorrichtung (16) für landwirtschaftliches Erntegut, wobei die Aufnahmevorrichtung (16) neben einer frontseitig angeordneten, antreibbaren Aufsammeltrommel (18) zum Aufnehmen von Erntegut mindestens ein antreibbares Förderorgan (22) zum Fördern von Erntegut zu einem Erntegutkanal (26), insbesondere einem Förderrotor (28) in dem Erntegutkanal (26), und mindestens einen, in Förderrichtung vor dem Förderorgan (22) angeordneten, ersten Rollenniederhalter (34) aufweist, wobei der Rollenniederhalter (34, 48) mindestens zwei Förderabschnitte (50, 52, 54) aufweist, durch welche zumindest ein Teil des Erntegutes im Wesentlichen quer zu einer Längsachse (44) und/oder in Richtung der Längsachse (44) der Erntemaschine (10) ablenkbar ist, wobei die Förderabschnitte (50, 52, 54) mit unterschiedlichen Drehzahlen antreibbar sind, **dadurch gekennzeichnet, dass** die Drehzahl jedes Förderabschnitts (50, 52, 54) in Abhängigkeit mindestens eines Betriebsparameters regelbar ist.

2. Erntemaschine nach Anspruch 1, **dadurch gekennzeichnet, dass** der Rollenniederhalter (34, 48) drei Förderabschnitte (50, 52, 54) aufweist, wobei ein erster Förderabschnitt (50) im Wesentlichen mittig des Rollenniederhalters (34, 48) und/oder der Aufnahmevorrichtung (16) angeordnet ist, und ein zweiter und dritter Förderabschnitt (52, 54) jeweils außenseitig des ersten Förderabschnittes (50) angeordnet sind.

3. Erntemaschine nach Anspruch 1 oder 2, **dadurch gekennzeichnet, dass** die Förderabschnitte (50, 52, 54) koaxial oder in axialer Richtung versetzt zueinander angeordnet sind.

4. Erntemaschine nach einem der vorherigen Ansprüchen, **dadurch gekennzeichnet, dass** die außenseitigen Förderabschnitte (52, 54) eine spiralförmig ausgestaltete Oberflächenprofilierung (60) aufweist, welche eine Querförderung des Erntegutes ermöglicht.

5. Erntemaschine nach einem der vorherigen Ansprüchen, **dadurch gekennzeichnet, dass** der erste Förderabschnitt (50) eine jeweils endseitig, insbesondere in der Aufnahmevorrichtung (16), drehbar gelagerte Welle (62) aufweist, wobei die äußeren Förderabschnitte (52, 54) auf der Welle (62) drehbar angeordnet sind.

6. Erntemaschine nach einem der vorherigen Ansprüche, **dadurch gekennzeichnet, dass** die äußeren Förderabschnitte (52, 54) antreibbar sind, wobei der mittige, insbesondere der erste, Förderabschnitt (50) in einem Freilauf durch den Kontakt mit dem Erntegut drehbar ausgebildet ist.

7. Erntemaschine nach einem der vorherigen Ansprüchen, **dadurch gekennzeichnet, dass** die Förderabschnitte (50, 52, 54) in unterschiedliche Drehrichtungen antreibbar sind.

8. Erntemaschine nach einem der vorherigen Ansprüche, **dadurch gekennzeichnet, dass** eine Drehrichtung eines Förderabschnittes (50, 52, 54) in Abhängigkeit mindestens eines Betriebsparameters regelbar ist.

9. Erntemaschine nach einem der vorherigen Ansprüche, **dadurch gekennzeichnet, dass** ein zweiter Rollenniederhalter (48) vorgesehen ist, welcher in Förderrichtung vor dem ersten Rollenniederhalter (34) und insbesondere vor der Aufsammeltrommel (18) angeordnet ist.

## Claims

1. An agricultural harvesting machine with a pickup device (16) for harvested agricultural crop wherein, in addition to a drivable pickup drum (18) disposed at the front for picking up harvested crop, the pickup device (16) has at least one drivable conveying means (22) for conveying harvested crop to a crop channel (26), in particular to a conveyor rotor (28) in the crop channel (26) and at least one first roller crop press (34) disposed in front of the conveying means (22) in the conveying direction, wherein the roller crop press (34, 48) has at least two conveying sections (50, 52, 54) by means of which at least a portion of the harvested crop can be deflected substantially transversely to a longitudinal axis (44) and/or in the direction of the longitudinal axis (44) of the harvesting machine (10), wherein the conveying sections (50, 52, 54) can be driven at different rotary speeds, **characterized in that** the rotary speed of each conveying section (50, 52, 54) can be adjusted as a function of at least one operational parameter.

2. The harvesting machine according to claim 1, **characterized in that** the roller crop press (34, 48) has three conveying sections (50, 52, 54), wherein a first conveying section (50) is disposed substantially centrally of the roller crop press (34, 48) and/or the pickup device (16), and a second and third conveying section (52, 54) are respectively disposed on the outward side of the first conveying section (50).

3. The harvesting machine according to claim 1 or claim 2, **characterized in that** the conveying sections (50, 52, 54) are disposed coaxially with respect to each other or offset with respect to each other in the axial direction.

4. The harvesting machine according to one of the preceding claims, **characterized in that** the outward conveying sections (52, 54) have a surface profiling (60) which is in the shape of a spiral, which enables the harvested crop to be conveyed transversely.

5. The harvesting machine according to one of the preceding claims, **characterized in that** the first conveying section (50) has a shaft (62) which is rotatably mounted at respective ends, in particular in the pickup device (16), wherein the outer conveying sections (52, 54) are rotatably disposed on the shaft (62).

6. The harvesting machine according to one of the preceding claims, **characterized in that** the outer conveying sections (52, 54) can be driven, wherein the central, in particular the first conveying section (50), is configured so as to be freely rotatable by means of contact with the harvested crop.

7. The harvesting machine according to one of the preceding claims, **characterized in that** the conveying sections (50, 52, 54) can be driven in different directions of rotation.

8. The harvesting machine according to one of the preceding claims, **characterized in that** a direction of rotation of a conveying section (50, 52, 54) can be adjusted as a function of at least one operational parameter.

9. The harvesting machine according to one of the preceding claims, **characterized in that** a second roller crop press (48) is provided which is disposed in front of the first roller crop press (34) in the conveying direction and in particular in front of the pickup drum (18).

## Revendications

1. Machine agricole de récolte comprenant un dispositif de ramassage (16) pour du produit agricole récolté, le dispositif de ramassage (16) comportant, en plus d'un tambour de ramassage entraînable (18) disposé frontalement pour ramasser du produit récolté, au moins un organe d'amenée entraînable (22) pour amener du produit récolté à un canal de produit récolté (26), en particulier à un rotor d'amenée (28) dans le canal de produit récolté (26), et au moins un premier rouleau tasseur (34) disposé devant l'organe d'amenée (22) par rapport à la direction d'amenée, le rouleau tasseur (34, 48) comportant au moins deux portions d'amenée (50, 52, 54) par l'intermédiaire desquelles au moins une partie du produit récolté peut être déviée sensiblement transversalement à un axe longitudinal (44) et/ou en direction de axe longitudinal (44) de la machine de récolte (10), les portions d'amenée (50, 52, 54) étant entraînables à diverses vitesses de rotation, **caractérisée en ce que** la vitesse de rotation de chaque portion d'amenée (50, 52, 54) est régulable en fonction d'au moins un paramètre de fonctionnement.

2. Machine de récolte selon la revendication 1, **caractérisée en ce que** le rouleau tasseur (34, 48) comporte trois portions d'amenée (50, 52, 54), une première portion d'amenée (50) étant disposée sensiblement au centre du rouleau tasseur (34, 48) et/ou du dispositif de ramassage (16), et une deuxième et une troisième portion d'amenée (52, 54) étant disposées respectivement à l'extérieur de la première portion d'amenée (50).

3. Machine de récolte selon la revendication 1 ou 2, **caractérisée en ce que** les portions d'amenée (50, 52, 54) sont disposées coaxialement ou décalées les unes par rapport aux autres dans la direction axiale.

4. Machine de récolte selon une des revendications précédentes, **caractérisée en ce que** les portions d'amenée extérieures (52, 54) présentent un profilage de surface spiralé (60) qui permet une amenée transversale du produit récolté.

5. Machine de récolte selon une des revendications précédentes, **caractérisée en ce que** la première portion d'amenée (50) comporte respectivement à ses extrémités, en particulier dans le dispositif de ramassage (16), un arbre (62) monté en rotation, les portions d'amenée extérieures (52, 54) étant disposées à rotation sur l'arbre (62).

6. Machine de récolte selon une des revendications précédentes, **caractérisée en ce que** les portions d'amenée extérieures (52, 54) sont entrainables, la portion d'amenée centrale, en particulier la première, (50) étant conçue pour tourner en libre rotation par le contact avec le produit récolté.

7. Machine de récolte selon une des revendications précédentes, **caractérisée en ce que** les portions d'amenée (50, 52, 54) sont entraînables dans des directions de rotation différentes.

8. Machine de récolte selon une des revendications précédentes, **caractérisée en ce qu'**une direction de rotation d'une portion d'amenée (50, 52, 54) est réglable en fonction d'au moins un paramètre de fonctionnement.

9. Machine de récolte selon une des revendications précédentes, **caractérisée en ce qu'**un second rouleau tasseur (48) est prévu, lequel est disposé devant le premier rouleau tasseur (34) et en particulier devant le tambour de ramassage (18) par rapport à la direction d'amenée.
